# EUROPEAN PATENT APPLICATION

(11) **EP 3 534 345 A1**
(43) Date of publication of application: **04.09.2019**
(21) Application number: 18461526.8
(22) Date of filing: 02.03.2018
(51) Int. Cl.: G08B 25/01, H04M 1/725

(54) **DEVICE FOR EMITTING A BLUETOOTH SIGNAL**

(71) Applicant: ICM In-Store Concepts + Media Polska Spolka z o.o., 02-762 Warszawa (PL)
(72) Inventor: Sidor, Janusz, 02-641 Warszawa (PL); Teschke, Stefan, 00-339 Warszawa (PL)
(74) Representative: AOMB Polska Sp. z.o.o.

(57) **Abstract**

The invention is related to a device for emitting signal consisting of a case (2), an energy source (3), a memory element (4), a Bluetooth signal transmitter (5) and an activator (1), wherein a unique ID code is stored in the memory element (4), characterised in that the device is configured such that upon activation of the device by the activator (1), the unique ID code is emitted by the Bluetooth signal transmitter (5). The invention includes also a set comprising such a device, a Bluetooth receiver and a dedicated programme, as well as use cases of such a set.

## Description

### Technical Field

The invention is related to a device for emitting signal, in particular a Bluetooth signal, said device having a very simple construction, consisting of a case, an energy source, a memory element, a Bluetooth signal transmitter and an activator.

### Background

Recently, Amazon has introduced to the market a device called a Dash Button, which is a Wi-Fi connected device that reorders customers favourite product with the press of a button. Each Dash Button is paired with a product of customer's choice. This device comprises a microcomputer havinga processor capable of running programmes on it. The Dash Button directly connects with internet through WiFi for making the order of selected products - see https://www.amazon.com/Dash-Buttons/b?ie=UTF8&node=10667898011

The publication US 2015106238 (A1) describes a code-provision device, whose actions are triggered by a user by means of a user input device. In an aspect, the user input device may be positioned to be inaccessible until the consumption of the at least a predetermined portion of the defined quantity of a product has occurred. The code-provision device may include a processor coupled a memory, and a transmitter coupled to the processor, wherein the memory holds a registered code. The user input device may include an input key or switch, for example a single-key push button.

In another embodiment of publication US 2015106238 (A1), the assembly may include a sensor coupled to the processor, wherein the memory further holds program instructions that when executed by the processor cause the code-provision device to transmit the registered code in response to a signal from the sensor. The sensor may be configured to provide the signal in response to a sensed commodity level relative to the packaging. However, in US 2015106238 (A1)there is no specific information about types of sensors, which can be used in the above-mentioned assembly.

The publication US 2015106238 (A1) does not disclose a code-provision device, in which the user input device (i.e. the key or switch) is integrated with the case of the code-provision device in part or totally.

There is mentioned that the construction of code-provision device can be simpler, but without any specific suggestions as to what could possibly be simplified.

Neither the Dash Button nor the US 2015106238 (A1) provide that the user input device include other sensors than a switch or key.

In any case, both the Dash Button and the device known from US 2015106238 (A1) are far too complicated in their structure and thus expensive to manufacture. For example, the Amazon Dash Button is never given away for free - but rather sold for $5, which sum is reimbursed to the user once the device is used to order products from Amazon.

### Summary

It is thus the object of the present invention to provide a device for emitting signal, having a very simple structure and being very cheap to manufacture.

The device for emitting signal consisting of a case, an energy source, a memory element, a Bluetooth signal transmitter and an activator, wherein a unique ID code is stored in the memory element, according to the invention is characterized in that the device is configured such that upon activation of the device by the activator, the unique ID code is emitted by the Bluetooth signal transmitter.

Preferably, the activator is at least partially integrated with the case.

Preferably, the activator is a manual electric switch, preferably a monostable manual electric switch.

Preferably, the activator is a sensor selected from the group comprising the following sensors: temperature sensor, pressure sensor, moisture sensor, accelerometer, giroscope, magnetometer, photoelement, camera, microphone, touch screen, infrared receiver, radio receiver, fingerprint reader, eye scanner.

Preferably, the device is configured such that the Bluetooth signal transmitter is only switched on and starts emitting once the activator is triggered and the Bluetooth signal transmitter is switched off and stops emitting shortly afterwards.

The invention further relates to a set comprising the device for emitting signal according to any of the preceding claims and a Bluetooth receiver, preferably a smartphone, tablet, palmtop, laptop or desktop computer, pairable with the for emitting signal via Bluetooth and a programme or application installable on the Bluetooth receiver, configured such that upon receipt of the unique ID code emitted by the Bluetooth signal transmitter by the Bluetooth receiver, an action is triggered on the Bluetooth receiver, preferably the programme or application is triggered on the Bluetooth receiver.

The invention further relates to the use of the inventive set, wherein the programme of application is configured to order a pre-defined product in an internet shop.

The invention also relates to the use of the inventive set, wherein the programme of application is configured to send alert notification(s) to other users, devices, institutions or units.

### Brief Description of the Drawings

Preferred embodiments of the present invention are presented in a more detailed way with reference to the attached drawing, in which:
- Fig. 1: presents a photograph of one of the preferred embodiments of the device according to the present invention, wherein the activator (manual button 1), partially integrated with the case 2 is visible and
- Fig. 2: shows a photograph of the device shown in Fig. 1 after removing the case - showing the printed circuit board inside the device from one side (A) and from the other side (B), with the button 1, battery 3, a memory element (4) which stores a unique ID code and a Bluetooth signal transmitter (5).

### Detailed Description

Preferred embodiments of the invention are described in details below. The examples serve only as an illustration and do not limit the scope of the present invention.

### Example 1

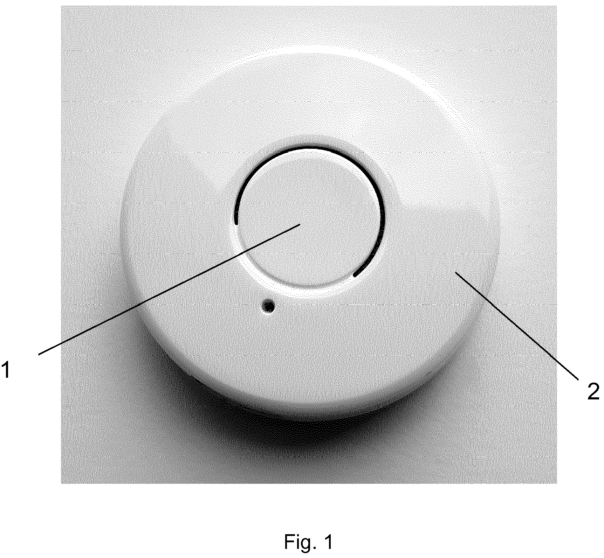

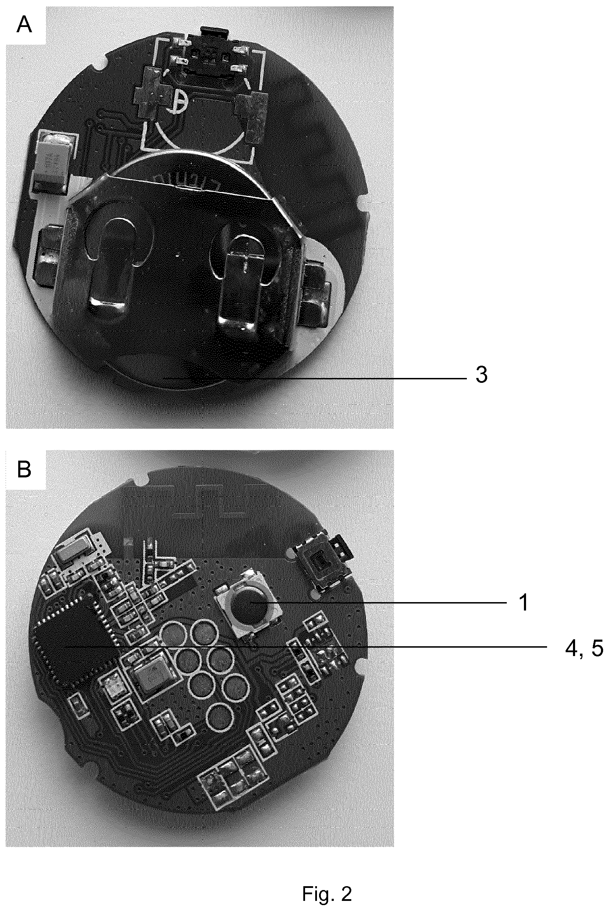

In one preferred embodiment, a device for emitting signal consists of an aluminum (but other metals can be used as well) or a plastic case 2, an energy source 3, a memory element 4 which stores a unique ID code, a Bluetooth signal transmitter 5 and an activator 1. This preferred embodiment is shown in the attached Figs. 1 and 2. As the energy source for example a Chaochuang Brand CR2032 Coin battery 3 can be used. But depending on the intended purpose of the device and the anticipated frequency of usage also other batteries like AAA can be used. Battery standby life time is between half a year and max. two years, again - depending on the battery type itself in conjunction with the intended purpose of the device and its anticipated frequency of usage. The Bluetooth signal transmitter 5 is a TICC2541 chipset in a Beacon (programmable chipset with Bluetooth 4.0 TICC2541). This chipset comes from the biggest chipset company in the USA "Texas Instruments" and features Bluetooth 4.0 low energy technology, 2.400GHz-2.4835GHz. It also includes a memory element 4 which stores a unique ID code. As the activator 1 a monostable manual electric switch 1 is used. The switch 1 is partially integrated with the case 2 of the device. Specifically, it means that the part of the switch 1 intended for pressing by a user, is at the same time a part of the case 2 of the device, as shown in Fig. 1. In other words, the functional part of the switch 1 is available to the user on the external surface of the case 2 of the device.

The device for emitting signal is configured such that upon activation of the device by pressing the switch (button) 1, the unique ID code is emitted by the Bluetooth signal transmitter 4. The emitted signal may be in turns received by a Bluetooth receiving device (such as a smartphone) and may trigger an action on the Bluetooth receiving device (such as: starting an application on the smartphone).

### Example 2

The signal emitting device has the structure as described in the Example 1. However, as the activator - a sensor other than a mechanical switch can be used. In particular, it may be a sensor selected from the group comprising the following sensors: temperature sensor, pressure sensor, moisture sensor, accelerometer, giroscope, magnetometer, photoelement, camera, microphone, touch screen, infrared receiver, radio receiver, fingerprint reader, eye scanner. The sensor may be partially or totally integrated with the case of the device.

The device for emitting signal is configured such that upon activation of the device by the activator, i.e. by changing the relevant parameter (temperature, pressure, moisture speed, height or other) which the corresponding sensor used as the activator can detect, the unique ID code is emitted by the Bluetooth signal transmitter. The emitted signal may be in turns received by a Bluetooth receiving device (such as a smartphone) and may trigger an action on the Bluetooth receiving device (such as: starting an application on the smartphone).

### Use case 1 - "order button"

The signal emitting device has the structure as described in the Example 1, with a manual switch (button) as the activator (trigger). The device is paired via Bluetooth a smartphone. There is a dedicated application running on this smartphone.

Upon receiving of Bluetooth signal including the unique ID code the from the inventive device by the smartphone - the application is activated on the smartphone and the application orders a product in a shop, typically - an internet shop. The kind of product, amount of product, delivery address, payment terms and means etc. can all be pre-defined in the application by the user. This pre-definition can be done during the set-up process, when the inventive device is paired for the first time with the smartphone or at any other time after or before pairing.

### Use case 2 - "SOS button - manual"

The signal emitting device has the structure as described in the Example 1, with a manual switch (button) as the activator (trigger). The device is paired via Bluetooth a smartphone. There is a dedicated application running on this smartphone.

Upon receiving of Bluetooth signal including the unique ID code the from the inventive device by the smartphone - the application is activated on the smartphone (called further the alarming smartphone) and the application sends alert notification. This may include any or all of the following:
- notifying users and/or devices (such as smartphones) in the physical proximity of the alarming smartphone about a dangerous situation, wherein preferably the alert includes information about the location of the alarming smartphone; the advantage of this option is that people in the direct vicinity of the dangerous situation, once notified - may offer help;
- notifying pre-defined users and/or devices (such as smartphones) independent from their physical location about a dangerous situation, wherein preferably the alert includes information about the location of the alarming smartphone; the advantage of this option is that people such as relatives or friends once notified - may offer help, independent from their physical location at the moment of notification;
- notifying pre-defined institutions, organizations, units and/or devices (such as smartphones) dependent or independent from their physical location about a dangerous situation, wherein preferably the alert includes information about the location of the alarming smartphone; the advantage of this option is that specialized units such as police, security guards, fire brigade, emergency medical services etc. can be notified;

It is the advantage of the present invention that in case a user of the inventive device is attacked - he or she may trigger the notification as described above and the notification may be carried out in a way completely unnoticed by the attacking person(s).

The following advantageous options regarding the "SOS button" are foreseen:
Rampage Alert -> the "SOS button" for schools, universities etc. in their absence of any suitable alarm systems. Digital innovation for teachers in case of a rampage consisting of the "SOS button" and a mobile app (iOS and Android). Pushing our "SOS button" will immediately inform police and display an alarm on the notification screen of all users concurrently. The silent alarm avoids unmanageable panic reactions and chaos.

### Use case 3 - "SOS button - automatic"

The signal emitting device has the structure as described in the Example 2, with a giroscope as the activator (trigger). The device is paired via Bluetooth a smartphone. There is a dedicated application running on this smartphone. The device is intended for use by cyclists or motorcyclists. The gyroscope in the inventive device is able to measure its inclination angle with respect to the ground. A certain range of inclination angles is considered normal in course of normal bike or motorcycle ride (e.g. because of turning right or left). However, if a value of inclination angle outside this normal range is detected - the inventive device is activator (trigger) is activated. Preferably the detection should be well outside the normal range and should be observed continuously for a certain period of time (such as e.g. 15 seconds). For example, if is it observed that the user is lying flat on the ground for 15 seconds and was on the move directly before - it is concluded that the user had an accident. In such case alert notification(s) should be sent.

Upon receiving of Bluetooth signal including the unique ID code the from the inventive device by the smartphone - the application is activated on the smartphone (called further the alarming smartphone) and the application sends alert notification. This may include any or all of the following:
- notifying users and/or devices (such as smartphones) in the physical proximity of the alarming smartphone about a dangerous situation, wherein preferably the alert includes information about the location of the alarming smartphone; the advantage of this option is that people in the direct vicinity of the dangerous situation, once notified - may offer help;
- notifying pre-defined users and/or devices (such as smartphones) independent from their physical location about a dangerous situation, wherein preferably the alert includes information about the location of the alarming smartphone; the advantage of this option is that people such as relatives or friends once notified - may offer help, independent from their physical location at the moment of notification;
- notifying pre-defined institutions, organizations, units and/or devices (such as smartphones) dependent or independent from their physical location about a dangerous situation, wherein preferably the alert includes information about the location of the alarming smartphone; the advantage of this option is that specialized units such as police, security guards, fire brigade, emergency medical services etc. can be notified;

It is the advantage of the present invention that in case a user of the inventive device has an accident and is hurt or even unconscious - the inventive device will automatically, without intervention of the user, carry on the notification procedure as above and possibly get help.

Important advantage of the present invention over all prior art solutions consists in the extreme simplicity of the inventive device. Namely, the device serves merely to activate an application/start a programme on a programmable device, such a smartphone (preferably), a tablet, a palmtop, a laptop, a desktop computer and the inventive device uses the minimal set of means to achieve this result. This simplicity provides reliability, low power consumption, as well as a simple and cheap manufacturing process. All the functionality (whatever it may be) and process or operating parameters of the action(s) performed by such an application/programme can be configured or - preferably - preconfigured in the application/programme itself. As the inventive device submits its unique ID to the application/programme - it is possible for the application/programme to perform actions intended/pre-programmed for activation by this particular exemplar of the inventive device. It is thus possible that two of more different inventive devices are coupled/paired with two or more applications/programmes running on the same physical smartphone/tablet/computer etc. and that these two or more different applications/programmes perform different actions when triggered by their corresponding inventive devices. It is also conceivable that two or more different inventive devices are coupled/paired with the same application/programme running on the same physical smartphone/tablet/computer etc. and that this application/programme performs different actions when triggered by their corresponding inventive devices. Yet, it is conceivable that the same physical inventive device is coupled with two or more applications/programmes or two or more installations of the same application/programme running on two or more different physical devices, such as smartphones/tablets/computers etc., wherein the actions performed by these two or more applications/programmes or two or more installations of the same application/programme are configured individually for each application/programme or each installation of the application/programme. Also conceivable is that one inventive device is coupled with two or more different applications/programmes running on the same physical smartphone/tablet/computer etc. and the actions performed by these applications/programmes upon triggering by the inventive device are individually (and possibly differently) configured for each of them.

With respect to all embodiments, it should be noted that an unique and inventive feature of the solution presented in this application is that the inventive device is programmed such that - contrary to solutions known in the art - the Beacon 5 (programmable chipset with Bluetooth 4.0 TICC2541) contained therein is not broadcasting continuously, but only switched on and starts emitting once the button 1 is pressed (or: in a more general sense: once the activator 1 is triggered). And as soon as the associated application on a smartphone/tablet/computer is activated - the Beacon 5 is switched off, i.e. put back to "stand-by" mode, which saves a lot of energy.

## Claims

1. Device for emitting signal consisting of a case (2), an energy source (3), a memory element (4), a Bluetooth signal transmitter (5) and an activator (1), wherein a unique ID code is stored in the memory element (4), **characterised in that** the device is configured such that upon activation of the device by the activator (1), the unique ID code is emitted by the Bluetooth signal transmitter (5).

2. The device according to claim 1, **characterised in that** the activator (1) is at least partially integrated with the case (2).

3. The device according to claim 1 or 2, **characterised in that** the activator (1) is a manual electric switch (1), preferably a monostable manual electric switch (1).

4. The device according to claim 1 or 2, **characterised in that** the activator (1) is a sensor selected from the group comprising the following sensors: temperature sensor, pressure sensor, moisture sensor, accelerometer, giroscope, magnetometer, photoelement, camera, microphone, touch screen, infrared receiver, radio receiver, fingerprint reader, eye scanner.

5. The device according to any one of the preceding claims 1 to 4, **characterised in that** it is configured such that the Bluetooth signal transmitter (5) is only switched on and starts emitting once the activator (1) is triggered and the Bluetooth signal transmitter (5) is switched off and stops emitting shortly afterwards.

6. A set comprising the device for emitting signal according to any of the preceding claims and a Bluetooth receiver, preferably a smartphone, tablet, palmtop, laptop or desktop computer, pairable with the for emitting signal via Bluetooth and a programme or application installable on the Bluetooth receiver, configured such that upon receipt of the unique ID code emitted by the Bluetooth signal transmitter (5) by the Bluetooth receiver, an action is triggered on the Bluetooth receiver, preferably the programme or application is triggered on the Bluetooth receiver.

7. Use of the set according to claim 6, wherein the programme of application is configured to order a pre-defined product in an internet shop.

8. Use of the set according to claim 6, wherein the programme of application is configured to send alert notification(s) to other users, devices, institutions or units.
